# EUROPEAN PATENT SPECIFICATION

(11) **EP 1 516 756 B1**
(45) Date of publication and mention of the grant of the patent: **02.11.2006**
(21) Application number: 03021292.2
(22) Date of filing: 19.09.2003
(51) Int. Cl.: B60H 1/00, F04D 29/66

(54) **Fan assembly for air treatment systems for vehicles**
Gebläseanordnung für die Lüftungseinrichtung eines Fahrzeugs
Assemblage de ventilateur pour dispositif d'aération d'un véhicule

(43) Date of publication of application: 23.03.2005
(73) Proprietor: DENSO THERMAL SYSTEMS S.p.A., 10046 Poirino (Torino) (IT)
(72) Inventor: Ferrarese, Claudio, 10137 Torrazza Piemonte (IT); Lorenzini, Mauro, 10098 Rivoli (Torino) (IT)
(74) Representative: Marchitelli, Mauro

(56) References cited:
- DE-A- 10 131 590
- DE-A- 19 712 228
- DE-A- 19 746 185
- FR-A- 2 606 562
- US-A- 5 449 153

## Description

The present invention relates to a fan assembly for air treatment systems for vehicles.

Air treatment systems for vehicles are normally provided with a variable speed centrifugal fan which produces a flow of air that, possibly after a heating and/or cooling/dehumidifying treatment, is sent into the passenger compartment of the vehicle. The fan assembly of an air treatment system for vehicles is normally formed by a case made of injection-moulded plastic material provided with a seat within which is mounted an electric motor bearing a centrifugal fan. The electric motor is connected to a source of electrical power by means of a connector which extends through an opening of the case.

DE-A-19746185 discloses a holder for a fan motor of a ventilation, heating or air-conditioning installation of a car according to the preamble of claim 1 having elastically flexible support elements for vibration decoupling between motor and holder. The support elements are moulded in two-components moulding process on to the holder.

The object of the present invention is to provide an enhanced fan assembly comprising a smaller number of components and which can be assembled in a simpler and more rapid manner than prior art fan assemblies.

According to the present invention, said object is achieved by a fan assembly having the characteristics set out in the main claim.

The present invention will now be described in detail with reference to the accompanying drawing, provided purely by way of non limiting example, in which:
- Figure 1 is a perspective view of a fan assembly according to the present invention,
- Figure 2 is a plan view according to the arrow II of Figure 1,
- Figure 3 is a section according to the line III-III of Figure 2,
- Figure 4 is an enlarged detail of the part indicated by the arrow IV in Figure 3, and
- Figures 5 and 6 are sections according to the lines V-V and VI-VI of Figure 2.

With reference to the figures, the reference number 10 designates a fan assembly for air treatment systems for vehicles. The fan assembly 10 comprises a case 12 constituted by injection moulded plastic material. For example, the plastic material used for moulding the case 12 can be polypropylene or a similar thermoplastic material. The plastic material forming the case 12 can be mixed with filler materials, for example with talcum in a percentage for example in the order of 20%.

The case 12 comprises a seat 14 having a cavity 16 defined by a lateral wall 18 and by a bottom wall 20. The seat 14 is open on the side opposite to the bottom wall 20. The lateral wall 18 of the seat 14 is integrally formed with a radial flange 22 provided with a fastening portion 24. The case 12 can also be provided with reinforcing elements 26 integral with the radial flange 22 and with the lateral wall 18 of the seat 12, which may be fitted with integral positioning pins 28.

The seat 14 is provided with a through opening 30 which preferably extends in part along the lateral wall 18 and in part along the bottom wall 20.

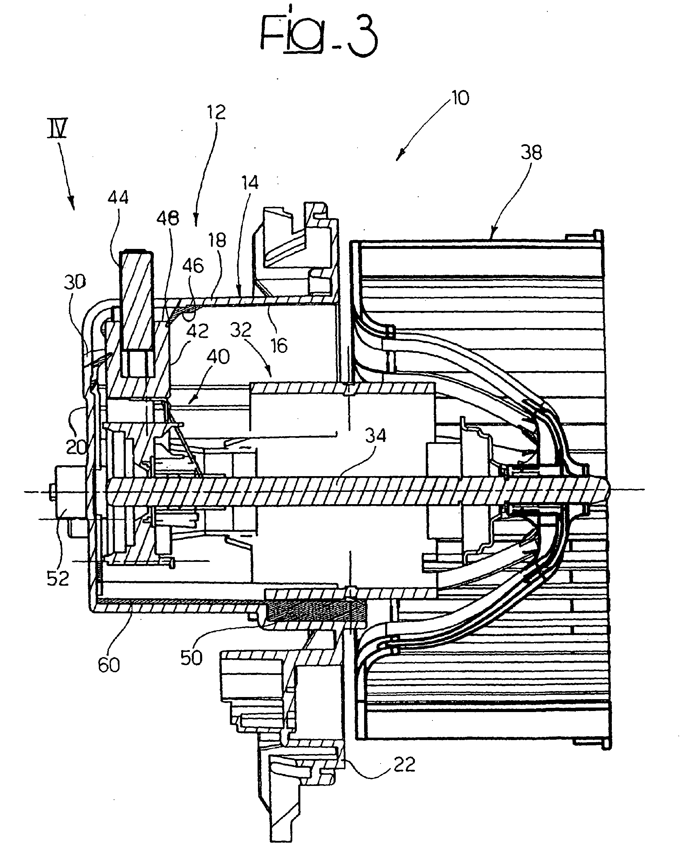

With reference to figures 3, 5 and 6, the fan assembly 10 comprises an electric motor 32 housed in the cavity 16 of the case 12. The electric motor 32 is provided with a shaft 34 integral with the rotor 36 and bearing at an end thereof a centrifugal fan 38.

The motor 32 is provided with a brush holder section 40 whereto is secured an electrical connector 42. The connector 42 co-operates with a complementary connector 44 connected to an electrical power supply cable (not shown).

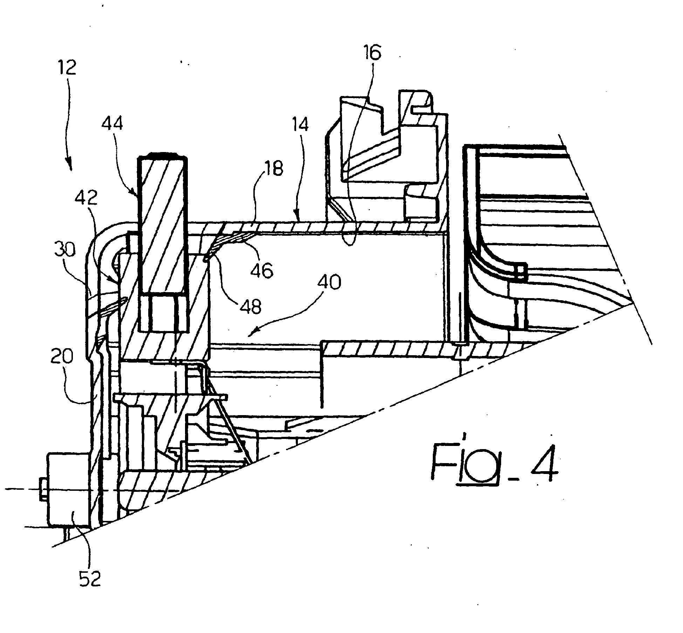

With reference to figures 3 and 4, the complementary connectors 42, 44 extend with ample play through the through opening 30 of the seat 14. Along the edge of the through opening 30, on the inner side of the seat 14, is applied a sealing element 46 having a lip portion 48 which bears on the outer surface of the connector 42 forming a seal that prevents air from escaping through the space between the edge of the opening 32 and the outer surface of the connector 42.

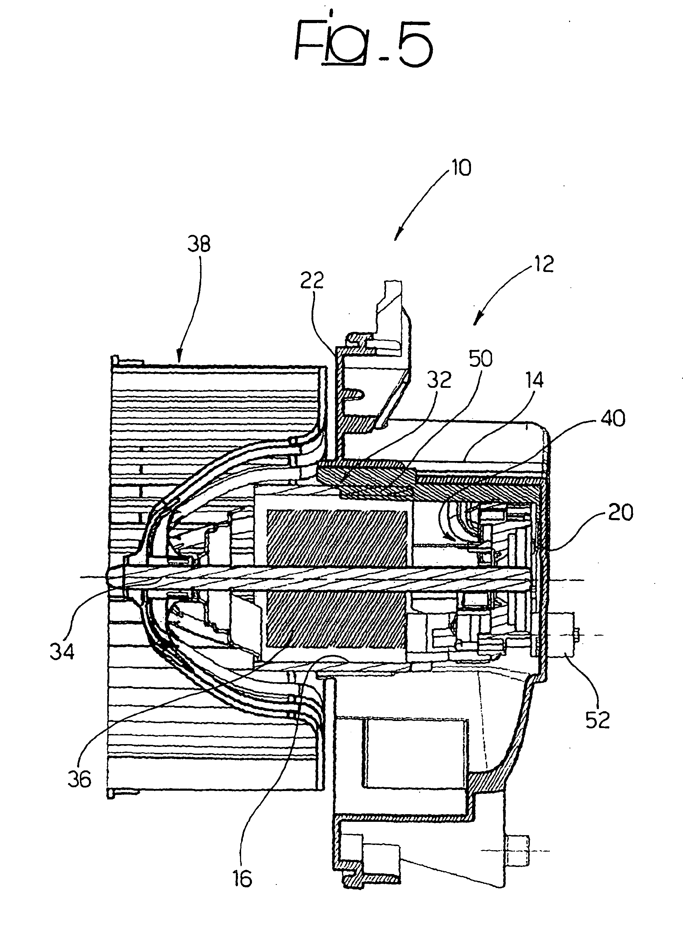

With reference to figures 3 and 5, on the inner surface of the cavity 16 is applied a plurality of support elements 50 made of soft plastic material, interposed between the inner wall of the cavity 16 and the outer surface of the electric motor 32. The support elements 50 extend in the longitudinal direction and substantially have the shape of ribs which project radially towards the interior of the inner surface of the cavity 16. Preferably, three support elements 50 are provided, mutually distanced by 120° in the circumferential direction. The support elements 50 serve the purpose of preventing a direct contact between the outer surface of the electric motor 32 and the inner surface of the cavity 16. It will be readily understood that the number, the shape and the dimensions of the stiffening elements 50 may vary according to requirements.

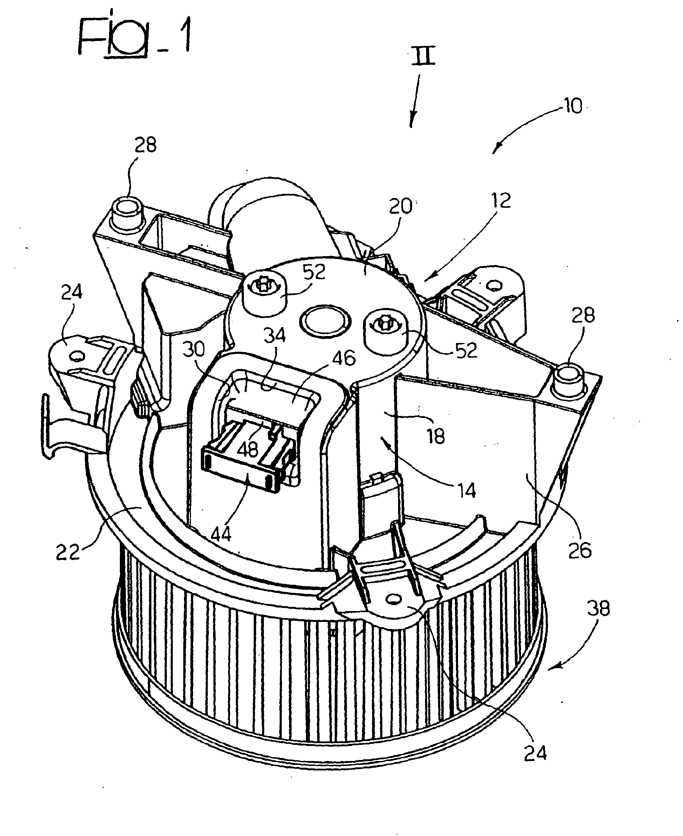

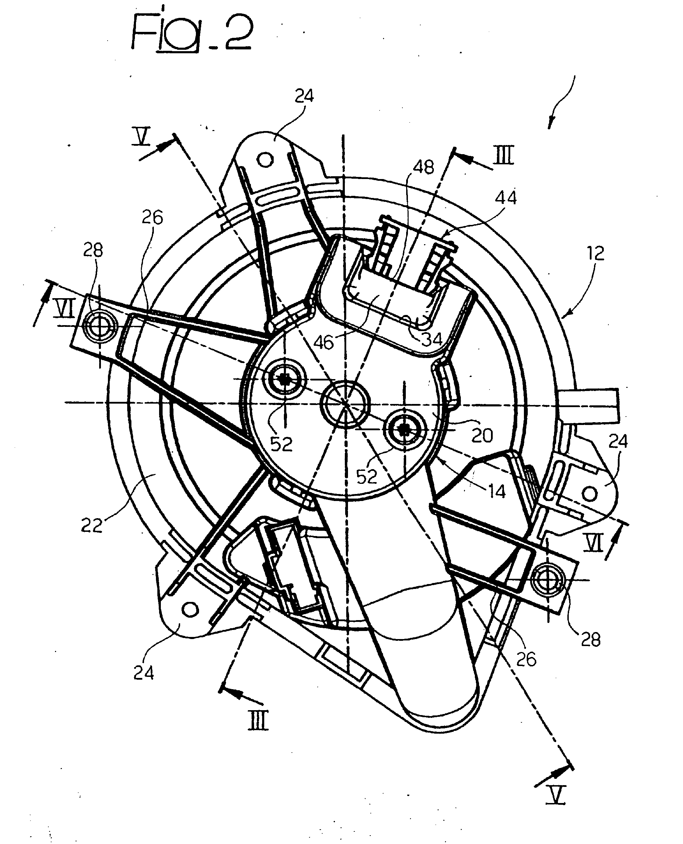

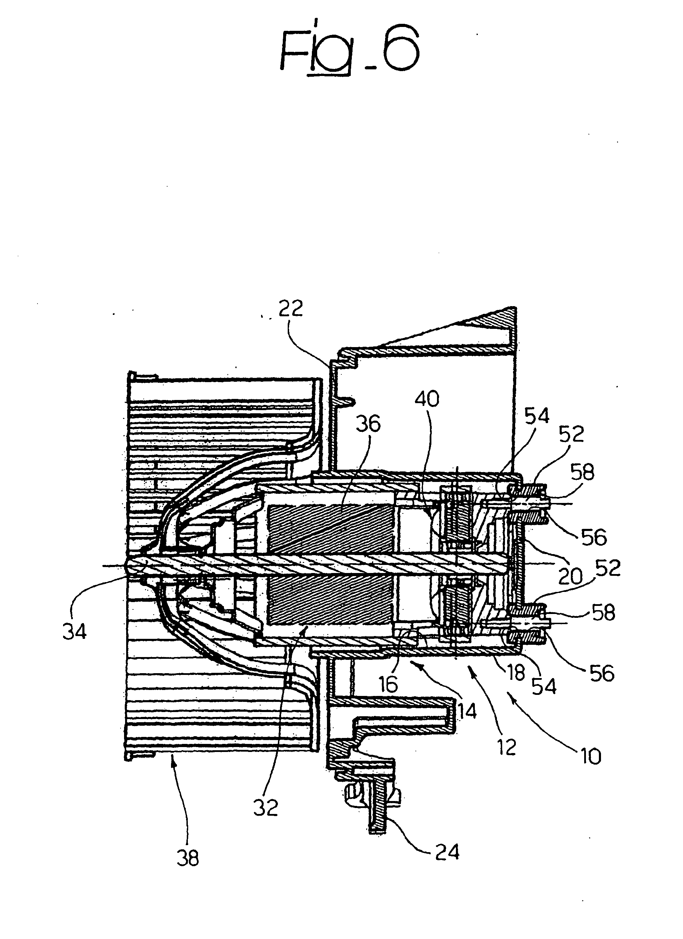

With reference to figures 1, 2 and 6, the seat 14 is provided on its outer surface with fastening elements 52 made of soft plastic material applied in correspondence with the respective holes 54 of the bottom wall 10. As shown in particular in Figure 6, each of the fastening elements 52 has a portion that projects from the outer side of the bottom wall 20 and a portion that projects towards the interior of the cavity 16 on the inner side of the bottom wall 20. The fastening elements 52 have respective through openings 56 through which extend respective fastening screws 58 whose purpose is axially to fasten the electric motor 32 relative to the seat 14 of the case 12.

The sealing element 46, the support elements 50 and the fastening elements 52 are formed by over-injecting a second soft material, softer than the first plastic material forming the case 12. The material forming the elements 46, 50 and 52 is injected into the same mould into which the plastic material forming the case 12 was injected. Immediately after the injection forming and partial solidification of the case 12, the second material is injected into injection moulding cavities which communicate with surface portions of the case 12. The second injected material is chemically and physically compatible with the material constituting the case 12, in such a way as to have a chemical-physical anchoring between the elements 46, 50 and 52 and the material forming the case 12. For example, the material forming said elements could be an injectable elastomeric material, such as Santoprene^{®}.

Preferably, the sealing element 46, the support elements 50 and the fastening elements 52 are mutually connected by thin strips of the second injected material, such as the one designated by the reference number 60 in Figure 3. Said strips derive from the presence in the injection mould of moulding channels which mutually connect the seats for forming the elements 46, 50 and 52. Said moulding channels allow to effect the injection of the second material starting from a single injection nozzle.

The over-injected elements 50 and 52 allow to maintain the motor-fan assembly detached from the case 12 to prevent the transmission of vibrations originated by the motor-fan assembly to the case and to the parts connected thereto, in order to obtain a reduction of the noise generated by the fan assembly. Said elements also allow to fasten the motor axially to the case without using additional fastening elements and maintaining an elastic connection that does not transmit vibrations. Moreover, the sealing element 46 allows to simplify the electrical connection and to obtain a mechanical disengagement between the case and the connector so that the connector is free to move together with the engine whereto it is fastened without interfering with the case and without transmitting vibrations to the case itself.

## Claims

1. Fan assembly for air treatment systems for vehicles, comprising:
- a support case (12) formed by a first injection moulded plastic material, having a seat (16) defined by a lateral wall (18) and by a bottom wall (20),
- an electric motor (32) housed in said seat (14) and bearing a fan (38),
- a plurality of support elements (50) made of soft plastic material, interposed between the inner wall of the cavity (16) and the outer surface of the electric motor (32) having the shape of ribs which project radially towards the interior of the inner surface of the cavity (16),
- a plurality of fastening elements (52) made of soft plastic material applied in correspondence with respective holes (54) of the bottom wall (10) of said seat (16)
wherein the support elements (50) and the fastening elements are formed by over-injecting a second material, softer than said first material, on respective portions of said seat (14),
**characterized in that**
the electric motor has a brush holder section (40) whereto is secured an electrical connector (42) which extends with play through a through opening (30) of the seat (14), along the edge of the through opening (30), on the inner side of the seat (14), being applied a sealing element (46) having a lip portion (48) which bears on the outer surface of the connector (42) forming a seal that prevents air from escaping through the space between the edge of the opening (32) and the outer surface of the connector (42), the sealing element (46) being formed by over-injection of the same material forming said support elements (50) and fastening elements (52).

2. Fan assembly as claimed in claim 1, **characterised in that** it comprises a strip formed by said second material which mutually connects said support elements (50), sealing elements (46) and fastening elements (52).

## Patentansprüche

1. Gebläsezusammenbau für Lüftungssysteme für Fahrzeuge, umfassend:
ein Unterstützungsgehäuse (12), geformt aus einem ersten spritzgegossenen Kunststoffinaterial, das eine Aufnahme (16) hat, die durch eine Seitenwand (18) und eine Bodenwand (20) definiert ist;
einen elektrischen Motor (32), der in der Aufnahme (14) untergebracht ist und ein Gebläse (38) trägt;
eine Mehrzahl von Unterstützungselementen (50), hergestellt aus weichem Kunststoff, die zwischen der inneren Wand des Hohlraums (16) und der äußeren Oberfläche des elektrischen Motors (32) eingeschoben sind, wobei sie die Form von Rippen haben, die radial nach außen hin zum Innern der Innenfläche des Hohlraums (16) hervorstehen;
eine Mehrzahl von Befestigungselementen (52), hergestellt aus weichem Kunststoff, die in Korrespondenz zu den jeweiligen Löchern (54) der Bodenwand (20) der Aufnahme (16) angebracht sind,
wobei die Unterstützungselemente (50) und die Befestigungselemente durch Draufspritzen eines zweiten Materials, das weicher als das erste Material ist, auf die jeweiligen Teilbereiche der Aufnahme (14) gebildet werden,
**dadurch gekennzeichnet,**
**dass** der elektrische Motor einen Bürstenhalter-Abschnitt (40) hat, an welchen ein elektrischer Stecker (42) befestigt wird, der sich mit Spiel durch eine Durchgangsöffnung (30) der Aufnahme (14) erstreckt, wobei entlang der Kante der Durchgangsöffnung (30) auf der Innenseite der Aufnahme (14) ein Dichtungselement (46) angebracht wird, das einen Lippenteil (48) hat, welcher auf der äußeren Oberfläche des Steckers (42) aufliegt, wodurch eine Dichtung gebildet wird, die verhindert, dass die Luft aus dem Raum zwischen der Kante der Öffnung (32) und der äußeren Oberfläche des Steckers (42) entweicht, wobei das Dichtungselement (46) durch das Draufspritzen desselben Material gebildet wird, welches die Unterstützungselemente (50) und die Befestigungselemente (52) bildet.

2. Gebläsezusammenbau nach Anspruch 1, **dadurch gekennzeichnet, dass** er einen Streifen umfasst, welcher aus dem zweiten Material gebildet wird, welches die Unterstützungselemente (50), die Dichtungselemente (46) und die Befestigungselemente (52) gegenseitig verbindet.

## Revendications

1. Assemblage de ventilateur pour systèmes de traitement d'air pour véhicules, comprenant :
- un carter de support (12) constitué dans une première matière plastique moulée par injection, ayant une assise (16) définie par une paroi latérale (18) et par une paroi de fond (20),
- un moteur électrique (32) logé dans ladite assise (14) et supportant un ventilateur (38),
- une pluralité d'éléments de support (50) réalisés dans une matière plastique tendre, interposés entre la paroi intérieure de la cavité (16) et la surface extérieure du moteur électrique (32) et ayant la forme de nervures faisant saillie radialement vers l'intérieur de la surface intérieure de la cavité (16),
- une pluralité d'éléments de fixation (52) réalisés dans une matière plastique tendre appliqués en correspondance à des trous respectifs (54) de la paroi de fond (10) de ladite assise (16),
les éléments de support (50) et les éléments de fixation étant constitués par sur-injection d'une seconde matière plus tendre que ladite première matière sur des parties respectives de ladite assise (14),
**caractérisé en ce que**
le moteur électrique présente une section de porte-balais (40) sur laquelle est fixé un connecteur électrique (42) qui se prolonge avec un certain jeu à travers une ouverture traversante (30) de l'assise (14), le long de l'arête de l'ouverture traversante (30), du côté intérieur de l'assise (14), un élément d'étanchéité (46) étant appliqué, ayant une partie de lèvre (48) qui donne sur la surface extérieure du connecteur (42) en formant un joint empêchant l'air de s'échapper par l'espace existant entre l'arête de l'ouverture (32) et la surface extérieure du connecteur (42), l'élément d'étanchéité (46) étant formé par sur-injection de la même matière que celle constituant lesdits éléments de support (50) et lesdits éléments de fixation (52).

2. Assemblage de ventilateur selon la revendication 1, **caractérisé en ce qu'**il comprend une bande formée par ladite seconde matière qui relie mutuellement lesdits éléments de support (50), lesdits éléments d'étanchéité (46) et lesdits éléments de fixation (52).
